# EUROPEAN PATENT APPLICATION

(11) **EP 3 051 689 A1**
(43) Date of publication of application: **03.08.2016**
(21) Application number: 15153243.9
(22) Date of filing: 30.01.2015
(51) Int. Cl.: H02P 3/24, H01H 9/00, H02P 13/06

(54) **A motor drive unit for operating a tap changer, a method of braking a motor drive unit, and an electromagnetic induction device**

(71) Applicant: ABB Technology Ltd, 8050 Zürich (CH)
(72) Inventor: Trangärd, Arne, 723 35 Västerås (SE); Derkx, Jeroen, 745 95 Enköping (SE); Honarpardaz, Mohammadali, 722 24 Västerås (SE)
(74) Representative: Savela, Reino Aleksi

(57) **Abstract**

The present disclosure relates to a motor drive unit (1) configured to operate a tap changer of an electromagnetic induction device. The motor drive unit (1) comprises an induction motor (M), a tap changer drive mechanism (5) arranged to be driven by the induction motor (M), and arranged to be mechanically coupled to a tap changer (5), and a rectifier (7). Braking operation of the motor drive unit (1) is obtained by means of the rectifier (7) which provides a DC current to the induction motor (M) to thereby obtain DC braking of the motor drive unit (1). The present disclosure also relates to an electromagnetic induction device and to a method of braking a motor drive unit (1).

## Description

### TECHNICAL FIELD

The present disclosure generally relates to motor drive units for tap changers for electromagnetic induction devices. In particular, it relates to a motor drive unit for operating a tap changer, to an electromagnetic induction device comprising such a motor drive unit, and to a method of braking a motor drive unit following a tap change operation.

### BACKGROUND

Tap changing may for example be utilised in the event that the load of an electromagnetic induction device such as a transformer changes, which results in that the electromagnetic induction device output voltage level changes.

A tap changer is a mechanism that enables the selection of a connection point along the winding of an electromagnetic induction device. Voltage regulation of an electromagnetic induction device output may thereby be obtained in discrete steps.

A mechanical tap changer may include a diverter switch for performing a tap change operation. The diverter switch may be biased by springs that are tensioned and released during a tap changing operation.

A mechanical tap changer is normally operated by means of a motor drive unit (MDU). An MDU may include an induction motor, i.e. an asynchronous motor, and a tap changer drive mechanism that is operated by the induction motor, and which includes a gear system that is driven by the induction motor during tap changing operation. The MDU may be configured to operate the tap changer by means of tensioning the springs, for subsequent release thereof. To this end, the tap changer drive mechanism may be arranged to mechanically cooperate with the springs of the tap changer and thus with the diverter switch.

Typically, a tap change operation is initiated by a voltage regulator which monitors network voltage levels, and which is configured to send a control signal in the form of a switching pulse to contactors of the MDU for starting the induction motor and thereby effect a tap changing operation.

It is normally desirable that the MDU stops within a certain amount of time following a tap change operation. Today, this stop may be obtained naturally by means of friction, for example by turning the induction motor off at a certain predetermined time which ensures a stop at a desired position of the gear system. Alternatively, the stop may be obtained by means of a dedicated mechanical brake. In comparison to natural friction braking, a dedicated mechanical brake provides a faster stop and higher stop accuracy. A mechanical brake is however a bottleneck component as far as maintenance is concerned.

### SUMMARY

An object of the present disclosure is to solve, or at least mitigate, the problems of the prior art.

Hence, according to a first aspect of the present disclosure there is provided a motor drive unit configured to operate a tap changer of an electromagnetic induction device, wherein the motor drive unit comprises: an induction motor, a tap changer drive mechanism arranged to be driven by the induction motor, and arranged to be mechanically coupled to the tap changer, an AC switch arrangement having first induction motor terminals connected to the induction motor, and first AC terminals connectable to an AC power source, wherein the AC switch arrangement is configured to be operated between a closed position to feed an AC current from the AC power source to the induction motor, and an open position, a DC switch arrangement having rectifier terminals, wherein the DC switch arrangement is configured to be operated between an open positon, and a closed position, and a rectifier having DC switch arrangement terminals connected to the rectifier terminals of the DC switch arrangement, wherein one of the rectifier and the DC switch arrangement has second induction motor terminals connected to the induction motor, and wherein the other one of the rectifier and the DC switch arrangement has second AC terminals connectable to the AC power source, wherein the motor drive unit is configured to set the DC switch arrangement in the closed position following commencement of a tap changing operation to provide a connection between the second AC terminal and the induction motor.

An effect that may be obtainable thereby is that braking action is created electromagnetically, in particular by means of DC-injection braking. This is obtained by the generation of a stationary or quasi-stationary magnetic field in the induction motor stator windings. This field induces a current in the rotor of the induction motor. This in turn results in a retarding torque on the rotor. Due to the braking effect obtained by means of DC-injection braking, dedicated braking action may be obtained without the drawback of mechanical wear provided by mechanical braking of a motor drive unit.

According to one embodiment the induction motor has stator windings, and wherein in the closed position the DC switch arrangement is configured to provide a connection between the second AC terminals and the stator windings.

According to one embodiment the rectifier comprises a diode bridge. The diode bridge may be a half bridge diode rectifier or a full bridge diode rectifier. A diode bridge provides a simple, robust and inexpensive means for realising the rectifier.

One embodiment comprises a timer configured to set the DC switch arrangement in the open position from the closed position when the DC switch arrangement has maintained the closed position a predetermined amount of time. Thereby, the induction motor may be disconnected from the DC power source obtained by rectifying the AC power source, during times when no tap change operation is being performed. Tap changing operations only represents a small fraction of the time of the operational lifetime of an electromagnetic induction device and thus of the induction motor. As a result, the induction motor will be subjected to less wear.

One embodiment comprises a current limiter arranged to limit a current flow through the rectifier and to the induction motor. The current limiter may for example be an autotransformer or a resistor.

According to one embodiment the AC switch arrangement comprises a contactor.

According to one embodiment the DC switch arrangement comprises a contactor. The contactor(s) of the DC switch arrangement may according to one variation be of the exact same type as that of the AC switch arrangement. The latter contactors are standard components of a motor drive unit, and thus fulfil safety requirements and are approved for use in the motor drive unit. In case the contactor(s) of the DC switch arrangement are identical to the approved AC switch arrangement contactors, advantageously no additional safety tests are required for the DC switch arrangement contactor(s).

According to a second aspect of the present disclosure there is provided an electromagnetic induction device comprising a tap changer, and a motor drive unit according to the first aspect, arranged to operate the tap changer.

One embodiment comprises a control unit configured to control the motor drive unit.

According to one embodiment the electromagnetic induction device is a transformer.

According to one embodiment the electromagnetic induction device is a reactor.

According to one embodiment the electromagnetic induction device is a high voltage electromagnetic induction device.

According to a third aspect of the present disclosure there is provided a method of braking a motor drive unit configured to operate a tap changer of an electromagnetic induction device, wherein the motor drive unit comprises an induction motor, a tap changer drive mechanism arranged to be driven by the induction motor, and arranged to be mechanically coupled to the tap changer, an AC switch arrangement having first induction motor terminals connected to the induction motor, and first AC terminals connectable to an AC power source, wherein the AC switch arrangement is configured to be operated between a closed position to feed an AC current from the AC power source to the induction motor, and an open position, a DC switch arrangement having rectifier terminals, wherein the DC switch arrangement is configured to be operated between an open positon, and a closed position, and a rectifier having DC switch arrangement terminals connected to the rectifier terminals of the DC switch arrangement, wherein one of the rectifier and the DC switch arrangement has second induction motor terminals connected to the induction motor, and wherein the other one of the rectifier and the DC switch arrangement has second AC terminals connectable to the AC power source, wherein the method comprises:
a) providing a first control signal to set the AC switch arrangement in the closed position to perform a tap change operation by means of the motor drive unit,
b) providing a second control signal to set the AC switch arrangement in the open position, and
c) providing a third control signal to set the DC switch arrangement in the closed position.

According to one embodiment step c) is performed after the AC switch arrangement has been set in the open position in step b).

According to one embodiment the motor drive unit comprises a timer, wherein the method comprises d) setting the DC switch arrangement in the open position by means of the timer after a predetermined amount of time that the DC switch arrangement has been in the closed position obtained in step c).

Generally, all terms used in the claims are to be interpreted according to their ordinary meaning in the technical field, unless explicitly defined otherwise herein. All references to "a/an/the element, apparatus, component, means, etc. are to be interpreted openly as referring to at least one instance of the element, apparatus, component, means, etc., unless explicitly stated otherwise.

### BRIEF DESCRIPTION OF THE DRAWINGS

The specific embodiments of the inventive concept will now be described, by way of example, with reference to the accompanying drawings, in which:
Fig. 1 is a schematic diagram of an example of a motor drive unit;
Fig. 2 is a schematic diagram of a portion of the motor drive unit in Fig. 1, with an example of the realisation of the rectifier;
Fig. 3 schematically shows examples of control signals for operating driving and braking the induction motor of the motor drive unit in Fig. 1;
Fig. 4 is a flow chart of examples of a method of driving and braking the motor drive unit in Fig. 1; and
Fig. 5 is a schematic diagram of an electromagnetic induction device comprising the motor drive unit in Fig. 1.

### DETAILED DESCRIPTION

The inventive concept will now be described more fully hereinafter with reference to the accompanying drawings, in which exemplifying embodiments are shown. The inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description.

A motor drive unit configured to operate a tap changer of an electromagnetic induction device is presented herein. The motor drive unit comprises an induction motor and a tap changer drive mechanism which is arranged to be driven by the induction motor. The tap changer drive mechanism is arranged to drive a tap changer to enable a tap changer to perform a tap changing operation. To this end, the tap changer drive mechanism comprises a shaft and a gear system arranged to cooperate with a tap changer. The tap changer drive mechanism may according to one variation be arranged to tension springs of the tap changer, for actuating a diverter switch of the tap changer.

The motor drive unit further comprises an AC switch arrangement which can be set either in an open position or in a closed position. When the AC switch arrangement is set in the closed position, the induction motor may be fed with an AC current from an AC power source.

The motor drive unit also comprises a DC switch arrangement which can be set in either a closed position or an open position, and a rectifier. The DC switch arrangement is arranged to provide a connection between an AC power source and the induction motor, through the rectifier, when the DC switch arrangement is set in the closed position. The DC switch arrangement is normally set in the closed position in connection with the AC switch arrangement being set in the open position, following a tap change operation. When the DC switch arrangement is set in the closed position, a quasi-stationary or stationary magnetic field, the magnetic field depending on the rectifier, is created in the induction motor. This results in electrical braking of the motor drive unit.

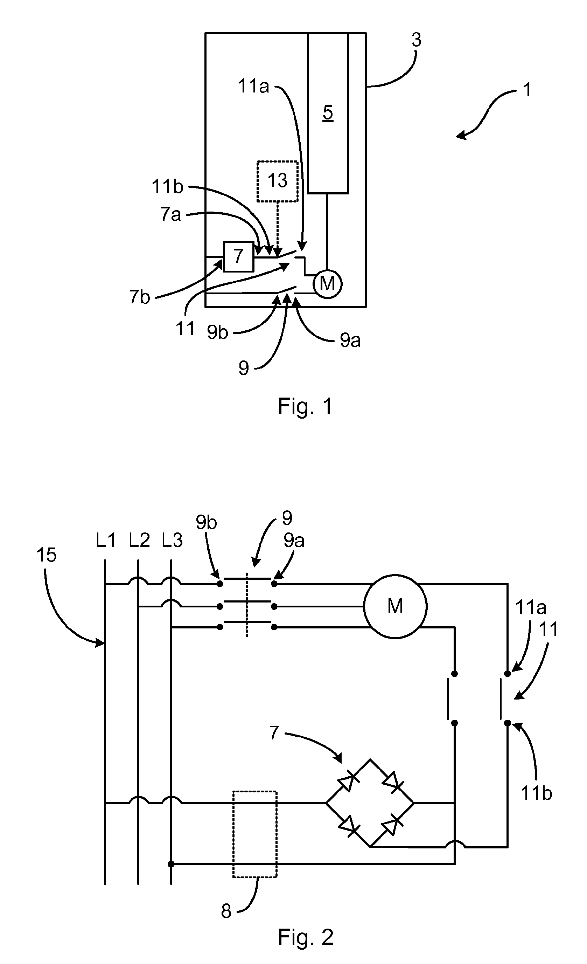

Examples of a motor drive unit arranged to operate a tap changer of an electromagnetic induction device, and the operation thereof, will now be described with reference to Figs 1-4.

Fig. 1 shows an example of a motor drive unit 1 configured to operate a tap changer of an electromagnetic induction device. The motor drive unit 1 comprises a housing 3, an induction motor M, a tap changer drive mechanism 5, a rectifier 7, an AC switch arrangement 9, and a DC switch arrangement 11.

According to one variation, the motor drive unit 1 may also comprise a timer 13.

The induction motor M comprises a rotor and stator windings. The induction motor M is arranged to drive the tap changer drive mechanism 5. The tap changer drive mechanism is mechanically coupled to the induction motor M. The tap changer drive mechanism 5 may comprise a gear system and a shaft which are arranged to be driven by the induction motor M. The tap changer drive mechanism 5 is arranged to drive a tap changer, to enable the tap changer to perform a tap changing operation. The mechanical design of motor drive units is well-known in the art and will therefore not be elaborated upon any further herein.

The AC switch arrangement 9 has first induction motor terminals 9a connected to the induction motor M, and AC terminals 9b connectable to an AC power source. The AC switch arrangement 9 is controllable to obtain a closed position in which it conducts current, and in which the induction motor M can be fed with an AC current from the AC power source, and to obtain an open position.

The AC switch arrangement 9 may for example comprise one or more contactor. Alternatively, the AC switch arrangement 9 may comprise one or more semiconductor switches, such as an insulated gate bipolar transistor (IGBT) module or a thyristor.

The AC switch arrangement 9 may be set in the closed position by means of a first control signal, in the case of a contactor for example in the form of a switching pulse, received from a control unit such as a voltage regulator. The DC switch arrangement 11 may for example comprise a contactor. Alternatively, the DC switch arrangement 11 may comprise one or more semiconductor switches, such as an insulated gate bipolar transistor (IGBT) module or a thyristor.

The DC switch arrangement 11 has rectifier terminals 11b. The rectifier 7 has DC switch arrangement terminals 7a. The rectifier terminals 11b of the DC switch arrangement 11 are connected to the DC switch arrangement terminals 7a of the rectifier 7.

According to the example shown in Fig. 1, the DC switch arrangement 11 has second induction motor terminals 11a connected to the induction motor M. In particular the second induction motor terminals 11a are connected to at least one of the stator windings of the induction motor M. Furthermore, according to the example the rectifier 7 has second AC terminals 7b connectable to an AC power source. Alternatively, the rectifier 7 could have the second induction motor terminals connected to the induction motor. In this case the DC switch arrangement would be provided with the second AC terminals. In other words, the DC switch arrangement and the rectifier could switch place compared to the example shown in Fig. 1. In either case there is an electrical connection between the second AC terminals and the induction motor M when the DC switch arrangement is in the closed position.

In variations comprising the timer 13, the timer 13 may be configured to set the DC switch arrangement 11 in the open position when the DC switch arrangement 11 has been in its closed position a predetermined amount of time.

Fig. 2 shows a circuit diagram of the induction motor M and its connections to an AC power source 15, here exemplified by electrical phases L1-L3. Although a three-phase design is shown in the example in Fig. 2, it should be noted that the motor drive unit 1 concept disclosed herein may also be applied to single-phase designs, as well as to multi-phase designs other than three-phase. For example in the case of a single phase the rectifier may be connected between the phase and the neutral.

In the variation shown in Fig. 2, the rectifier 7 is exemplified by a diode bridge. The exemplified diode bridge or diode bridge rectifier is a full bridge rectifier. However, the rectifier 7 could alternatively be a half bridge rectifier. The rectifier may include a smoothing component; it is however not necessary to include a smoothing component such as a capacitor or inductor in the design. Although the result of a half bridge or full bridge diode bridge rectifier without a smoothing component will not be a "perfect" DC source, it is sufficient for obtaining the braking effect of the motor drive unit 1.

The motor drive unit 1 may according to one variation comprise a current limiter 8, arranged to limit the current fed to the induction motor M from the AC power source 15. The current limiter 8 may for example be a resistor, or an autotransformer. The current limiter 8 may for example be connectable to the AC power source 15, arranged before the rectifier 7 and the DC switch arrangement 11, as seen in the direction of current flow into the induction motor M.

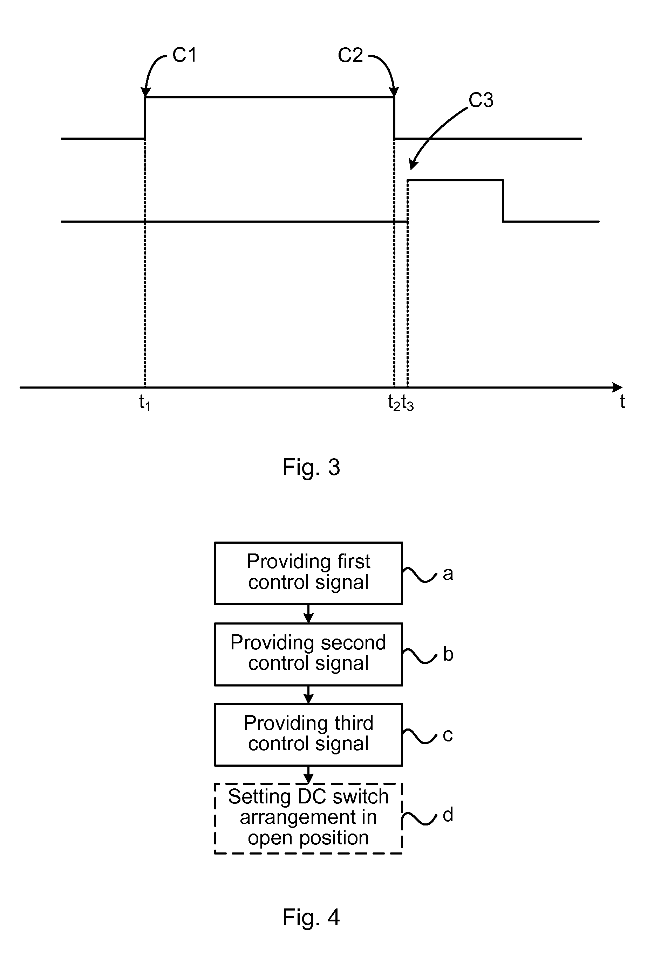

The operation of the motor drive unit 1 will now be described in more detail with reference to Figs. 3 and 4.

Fig. 4 depicts the plot of examples of three control signals C₁-C₃, and of an opening command C4 sent by the timer 13. In the uppermost graph a first control signal C1 is depicted. When a tap changing operation is to be performed, e.g. due to a control unit or voltage regulator having measured voltage levels below or above a reference voltage level or reference voltage interval, the control unit is configured to send the first control signal to the AC switch arrangement 9. According to the example, the first control signal C1 is sent at a time t1. The control signal C1 sets the AC switch arrangement 9 in the closed position from the open position. As a result, the induction motor M is connected to the AC power source 15, and hence the induction motor M is started.

Thus in a step a) a first control signal C1 is provided to the AC switch arrangement 9 to set the AC switch arrangement 9 in the closed position to perform a tap change operation by means of the motor drive unit 1.

In a step b) a second control signal C2 is provided to the AC switch arrangement 9 to set the AC switch arrangement 9 in the open position, when the tap changing operation has been performed.

According to the example the second control signal C2 is provided at time t2 and corresponds to when the pulse in the uppermost graph is set to its lower state. The first control signal C1 is a pulse with a width corresponding to the time that the AC switch arrangement 9 is in the closed position. An alternative would be that the control unit sends a short pulse at time t1 as a first control signal to set the AC switch arrangement in the closed position. A mechanical hold relay function may be configured to keep the AC switch arrangement in the closed position until time t3, when the AC switch arrangement is set in the open position. Another alternative would also be to send a short pulse to set the AC switch arrangement 9 in the closed position in step a) at time t1 and then another short pulse to set the AC switch arrangement 9 in the open position in step b) at time t2.

In a step c) a third control signal C3 is provided to the DC switch arrangement 11 to set the DC switch arrangement 11 in the closed position, which up until this point has been in the open position, i.e. during the tap changing operation.

Typically, the third control signal C3 is provided simultaneously with the second control signal C2, i.e. times t2 and t3 coincide, or after the second control signal C2 has been provided, i.e. time t3 occurs after time t2. The third control signal C3 may in some situations also be provided to the DC switch arrangement 11 before the second control signal C2 is provided to the AC switch arrangement 9.

By closing the DC switch arrangement 11, a DC current is injected to the induction motor M. This results in a braking operation due to a stationary or quasi-stationary magnetic field created in the stator windings of the induction motor M which results in a retarding torque on the rotor.

One variation comprises a step d) of setting the DC switch arrangement 11 in the open position by means of the timer. The timer 13 may set the DC switch arrangement 11 in the open position after a predetermined amount of time, time t4 minus time t2, during which the DC switch arrangement 11 has been in the closed position obtained in step c). The timer 13 may for example obtain the third control signal C3, wherein the timer will open the DC switch arrangement 11 after the predetermined amount of time from third control signal C3.

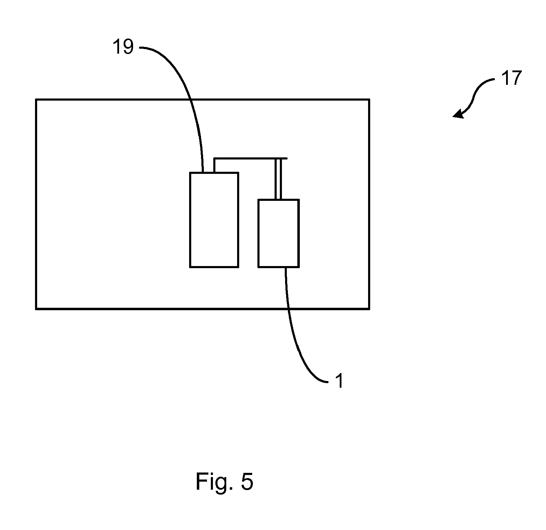

Fig. 5 shows an electromagnetic induction device 17 comprising a tap changer 19 and the motor drive unit 1. The motor drive unit 1 is arranged to drive the tap changer 19 during tap changing operation. The electromagnetic induction device 17 may also comprise a control unit, e.g. a voltage regulator, configured to control the motor drive unit 1, in particular the AC switch arrangement 9 and the DC switch arrangement 11 by means of control signals.

The electromagnetic induction device 17 may be a transformer such as a power transformer or distribution transformer, or a reactor. The electromagnetic induction device 19 may for example be a high voltage (HV) electromagnetic induction device.

According to one variation, the motor drive unit may comprise an electrical heater in order to heat the motor drive unit cabinet when located in a very cold environment. According to one variation the DC current in the induction motor fed from the rectifier may be used to heat the cabinet when no tap changing operation is being performed. The motor drive unit may in this case also comprise a thermostat or other regulating mechanism for controlling the DC current, for providing DC current to the electrical heater. According to one variation, the motor drive unit may further comprise an energy storage unit such as a capacitor, connectable to the rectifier by means of the DC switch arrangement. The energy storage unit may thereby be charged through the rectifier. The amount of energy that is pushed into the DC braking may thereby be defined by the energy storage capacity of the energy storage unit. In that way the system will be self-limiting.

The inventive concept has mainly been described above with reference to a few examples. However, as is readily appreciated by a person skilled in the art, other embodiments than the ones disclosed above are equally possible within the scope of the inventive concept, as defined by the appended claims.

## Claims

1. A motor drive unit (1) configured to operate a tap changer (19) of an electromagnetic induction device (17), wherein the motor drive unit (1) comprises:
an induction motor (M),
a tap changer drive mechanism (5) arranged to be driven by the induction motor (M), and arranged to be mechanically coupled to the tap changer (19),
an AC switch arrangement (9) having first induction motor terminals (9a) connected to the induction motor (M), and first AC terminals connectable to an AC power source (15), wherein the AC switch arrangement (9) is configured to be operated between a closed position to feed an AC current from the AC power source (15) to the induction motor (M), and an open position,
a DC switch arrangement (11) having rectifier terminals (11b), wherein the DC switch arrangement (11) is configured to be operated between an open positon, and a closed position, and
a rectifier (7) having DC switch arrangement terminals (7a) connected to the rectifier terminals (11b) of the DC switch arrangement (11),
wherein one of the rectifier (7) and the DC switch arrangement (11) has second induction motor terminals (11a) connected to the induction motor (M), and wherein the other one of the rectifier (7) and the DC switch arrangement (11) has second AC terminals (7b) connectable to the AC power source (15), wherein the motor drive unit (1) is configured to set the DC switch arrangement (11) in the closed position following commencement of a tap changing operation to provide a connection between the second AC terminal (7b) and the induction motor(M).

2. The motor drive unit (1) as claimed in claim 1, wherein the induction motor (M) has stator windings, and wherein in the closed position the DC switch arrangement (11) is configured to provide a connection between the second AC terminals (7b) and the stator windings.

3. The motor drive unit (1) as claimed in claim 1 or 2, wherein the rectifier (7) comprises a diode bridge.

4. The motor drive unit (1) as claimed in any of the preceding claims, comprising a timer (13) configured to set the DC switch arrangement (11) in the open position from the closed position when the DC switch arrangement (11) has maintained the closed position a predetermined amount of time.

5. The motor drive unit (1) as claimed in any of the preceding claims, comprising a current limiter (8) arranged to limit a current flow through the rectifier and to the induction motor (M).

6. The motor drive unit (1) as claimed in any of the preceding claims, wherein the AC switch arrangement (9) comprises a contactor.

7. The motor drive unit (1) as claimed in any of the preceding claims, wherein the DC switch arrangement (11) comprises a contactor.

8. An electromagnetic induction device (17) comprising:
a tap changer (19), and
a motor drive unit (1) as claimed in any of claim 1-7, arranged to operate the tap changer (19).

9. The electromagnetic induction device (17) as claimed in claim 8, comprising a control unit configured to control the motor drive unit.

10. The electromagnetic induction device (17) as claimed in claim 8 or 9, wherein the electromagnetic induction device (17) is a transformer.

11. The electromagnetic induction device (17) as claimed in claim 8 or 9, wherein the electromagnetic induction device (17) is a reactor.

12. The electromagnetic induction device (17) as claimed in any of claims 8-11, wherein the electromagnetic induction device (17) is a high voltage electromagnetic induction device.

13. A method of braking a motor drive unit configured to operate a tap changer (19) of an electromagnetic induction device (17), wherein the motor drive unit (1) comprises an induction motor (M), a tap changer drive mechanism (5) arranged to be driven by the induction motor (M), and arranged to be mechanically coupled to the tap changer (5), an AC switch arrangement (9) having first induction motor terminals (9a) connected to the induction motor (M), and first AC terminals (9b) connectable to an AC power source (15), wherein the AC switch arrangement (9) is configured to be operated between a closed position to feed an AC current from the AC power source (15) to the induction motor (M), and an open position, a DC switch arrangement (9) rectifier terminals (11b), wherein the DC switch arrangement (11) is configured to be operated between an open positon, and a closed position, and a rectifier (7) DC switch arrangement terminals (7a) connected to the rectifier terminals (11b) of the DC switch arrangement (11), wherein one of the rectifier (7) and the DC switch arrangement (11) has second induction motor terminals (11a) connected to the induction motor (M), and wherein the other one of the rectifier (7) and the DC switch arrangement (11) has second AC terminals (7b) connectable to the AC power source (15), wherein the method comprises:
a) providing a first control signal (C1) to set the AC switch arrangement (9) in the closed position to perform a tap change operation by means of the motor drive unit (1),
b) providing a second control signal (C2) to set the AC switch arrangement (9) in the open position, and
c) providing a third control signal (C3) to set the DC switch arrangement (11) in the closed position.

14. The method as claimed in claim 13, wherein , step c) is performed after the AC switch arrangement (9) has been set in the open position in step b).

15. The method as claimed in claim 13 or 14, wherein the motor drive unit comprises a timer (13), wherein the method comprises d) setting the DC switch arrangement (11) in the open position by means of the timer (13) after a predetermined amount of time that the DC switch arrangement (11) has been in the closed position obtained in step c).
